# EUROPÄISCHE PATENTSCHRIFT

(11) **EP 3 184 998 B1**
(45) Veröffentlichungstag und Bekanntmachung des Hinweises auf die Patenterteilung: **27.01.2021**
(21) Anmeldenummer: 16205217.9
(22) Anmeldetag: 20.12.2016
(51) Int. Cl.: G01N 21/956

(54) **INSPEKTIONSVORRICHTUNG UND VERFAHREN ZUM VERIFIZIEREN EINES CHIPKARTENHALBZEUGS**
INSPECTION DEVICE AND METHOD FOR VERIFYING A SEMIFINISHED CHIP CARD PRODUCT
DISPOSITIF D'INSPECTION ET PROCÉDÉ DE VÉRIFICATION D'UN DEMI-PRODUIT DE CARTE À PUCE

(30) Priorität: 23.12.2015 DE 102015122729
(43) Veröffentlichungstag der Anmeldung: 28.06.2017
(73) Patentinhaber: Bundesdruckerei GmbH, 10969 Berlin (DE)
(72) Erfinder: FERBER, Alexander, 12105 Berlin (DE); KLOESER, Joachim, 10779 Berlin (DE); ROSSEK, Kai, 12349 Berlin (DE); MUTH, Oliver, 12277 Berlin (DE)
(74) Vertreter: Patentship Patentanwaltsgesellschaft mbH

(56) Entgegenhaltungen:
- EP-A1- 1 598 861
- EP-A1- 2 583 826
- CN-A- 1 761 286
- US-A- 4 390 955
- XIAODONG XIE ET AL: "An Adaptive Image Enhancement Technique Based on Image Characteristic", IMAGE AND SIGNAL PROCESSING, 2009. CISP '09. 2ND INTERNATIONAL CONGRESS ON, IEEE, PISCATAWAY, NJ, USA, 17. Oktober 2009 (2009-10-17), Seiten 1-5, XP031553169, ISBN: 978-1-4244-4129-7
- E R Sitä ET AL: "Kantenextraktion", , 1 January 2006 (2006-01-01), XP055490623, Retrieved from the Internet: URL:http://www.mathematik.uni-ulm.de/stoch astik/lehre/ws05_06/seminar/ausarbeitung_w agner.pdf [retrieved on 2018-07-06]

## Beschreibung

Die vorliegende Erfindung betrifft eine Inspektionsvorrichtung und ein Verfahren zum Verifizieren eines Halbzeugs zum Herstellen einer Chipkarte mit einer durch eine Kante begrenzten Aussparung zur Aufnahme eines elektronischen Schaltkreises in Form eines Chips oder Chipmoduls.

Die Offenlegungsschrift EP 2 583 826 A1 zeigt eine Herstellung eines Inlays mit integriertem Regelkreis.

Die Druckschrift "XIADONG XIE ET AL.: "An Adaptive Image Enhancement Technique Based on Image Characteristic", IMAGE AND SIGNAL PROCESSING, 2009. CISP '09. 2ND INTERNATIONAL CONGRESS ON, IEEE, PISCATAWAY, NJ, USA, 17. Oktober 2009 (2009-10-17), Seiten 1-5, XP031553169, ISBN: 978-1-4244-4129-7" beschreibt die Verwendung eines Laplace-Filters, um ein Bild zu schärfen.

Die Offenlegungsschrift EP 1 598 861 A1 offenbart ein Verfahren und eine Vorrichtung zum Überprüfen von Spezifikationen einer Aussparung, die in einem Kartenkörper gebildet ist. Die Aussparung ist aus dem Kartenkörper gefräst.

Die Druckschrift "E R Sitä ET AL: "Kantenextraktion", 30. Januar 2006 (2006-01-30), XP055490623, Gefunden im Internet: URL:http://www.mathematik.uni-ulm.de/stochastik/lehre/ws05_06/seminar/ausarbeitung_wagner.pdf [gefunden am 2018-07-06]" offenbart die Verwendung eines Laplace-Filters als ein gradientenbasiertes Verfahren zweiter Ordnung, um eine Kante in einem Bild zu detektieren.

Moderne elektronische Identifikationsdokumente, beispielsweise elektronische Personalausweise, sind oftmals in Form einer Chipkarte ausgebildet. Chipkarten können ferner als Kreditkarten, Bankkarten, elektronische Börsen usw. ausgebildet sein und zur bargeldlosen Abwicklung von Transaktionen, wie beispielsweise zum Entrichten eines Beförderungsentgelts im Personennahverkehr oder zum Bezahlen eines Kaufpreises für eine Ware oder Dienstleistung, dienen.

Eine Chipkarte umfasst in der Regel einen Kartenkörper und einen in den Kartenkörper integrierten elektronischen Schaltkreis in Form eines Chips oder Chipmoduls, der zur Speicherung, Verarbeitung und/oder Erkennung von Informationen ausgebildet ist, die kontaktlos und/oder kontaktbehaftet mit einem Lesegerät ausgetauscht werden können.

Üblicherweise besteht der Kartenkörper einer Chipkarte aus mehreren Folien oder Lagen aus Kunststoff. Aus der WO2011/003518 und der DE102011001722 sind beispielhafte Herstellungsverfahren bekannt, bei denen ein auf einer Trägerfolie beispielsweise mittels Klebstoff befestigter elektronischer Schaltkreis in Form eines Chips oder Chipmoduls passgenau in eine Aussparung eingebracht wird, die in einer sogenannten Ausgleichsfolie ausgebildet ist. Dabei kann insbesondere bei Chipkarten, die kontaktlos mit einem Lesegerät kommunizieren, die Trägerfolie eine Antennenstruktur umfassen, die mit dem elektronischen Schaltkreis elektrisch verbunden ist.

Oftmals wird die Aussparung zur Aufnahme des elektronischen Schaltkreises in der Ausgleichsfolie mittels Laserschneiden erzeugt. Die Aussparung kann jedoch auch beispielsweise durch ein Ausstanzen erzeugt werden. Zur Fertigstellung einer Chipkarte können eine oder mehrere weitere Folien bzw. Lagen auf die Ober- und/oder Unterseite des aus Trägerfolie, Chip und Ausgleichsfolie bestehenden Halbzeugs, das auch als Inlay bezeichnet wird, laminiert werden, um den elektronischen Schaltkreis in den dadurch entstehenden Kartenkörper einzubetten.

Fehler bei der Ausrichtung und Anordnung des elektronischen Schaltkreises relativ zu der Aussparung können dazu führen, dass die fertiggestellte Chipkarte von vornherein nicht funktionsfähig ist oder unter den normalen Einflüssen, denen eine Chipkarte beim Einsatz ausgesetzt ist, nach kurzer Zeit im Feld ihre Funktionsfähigkeit verliert.

Daher besteht eine Aufgabe der vorliegenden Erfindung darin, ein Konzept zum automatisierten Verifizieren eines Chipkartenhalbzeugs mit einer Aussparung zur Aufnahme eines elektronischen Schaltkreises in Form eines Chips oder Chipmoduls zu schaffen, um insbesondere die vorstehend beschriebenen Probleme bei der Herstellung von Chipkarten vermeiden zu können.

Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Überraschenderweise hat sich herausgestellt, dass sich bei einem Chipkartenhalbzeug die Ausrichtung und/oder Anordnung des elektronischen Schaltkreises relativ zu der Aussparung des Chipkartenhalbzeugs besonders gut dadurch bestimmen lässt, dass mittels eines Laplace-Bildverarbeitungsfilters in einer Bildaufnahme des Chipkartenhalbzeugs der Verlauf der Kante bestimmt wird, durch welche die Aussparung begrenzt wird.

Somit betrifft die Erfindung gemäß einem ersten Aspekt eine Inspektionsvorrichtung zum Verifizieren eines Halbzeugs zum Herstellen einer Chipkarte mit einer durch eine Kante begrenzten Aussparung zur Aufnahme eines elektronischen Schaltkreises. Die Inspektionsvorrichtung umfasst eine Beleuchtungsquelle, welche ausgebildet ist, das Halbzeug mit Licht einer vorbestimmten Wellenlänge zu beleuchten, eine Bildkamera, welche ausgebildet ist, eine Bildaufnahme des beleuchteten Halbzeugs mit der durch die Kante begrenzten Aussparung zu erfassen, und einen Prozessor, welcher ausgebildet ist, in der Bildaufnahme mittels eines Laplace-Filters einen Verlauf der Kante als einen umlaufenden Bereich zu erfassen und das Halbzeug auf der Grundlage des erfassten Verlaufs der Kante zu verifizieren.

Dadurch wird ein effizientes Konzept zum automatisierten Verifizieren eines Halbzeugs zum Herstellen einer Chipkarte mit einer durch eine Kante begrenzten Aussparung zur Aufnahme eines elektronischen Schaltkreises in Form eines Chips oder Chipmoduls geschaffen.

Es handelt sich bei der Kante um eine Laserschneidkante.

Der Prozessor ist ausgebildet, in der Bildaufnahme mittels des Laplace-Filters den Verlauf der Kante als einen umlaufenden Bereich mit einer Lichtintensität zu erfassen, welche größer als eine Lichtintensität eines in der erfassten Bildaufnahme außerhalb des umlaufenden Bereichs liegenden Bereichs ist, wobei die Inpektionsvorrichtung so ausgebildet ist, dass das Halbzeug zwischen der Beleuchtungsquelle und der Bildkamera anordnernbar ist.

Gemäß einer Ausführungsform ist die Beleuchtungsquelle ausgebildet, das Halbzeug mit UV-Licht zu beleuchten, oder die Bildkamera ausgebildet, die Bildaufnahme im UV-Licht zu erfassen.

Dadurch wird beispielsweise der Vorteil erreicht, dass der Kontrast zwischen dem umlaufenden Bereich und benachbarten Bereichen in der erfassten Bildaufnahme verstärkt wird und sich somit der umlaufende Bereich besser automatisiert erfassen lässt.

Gemäß einer Ausführungsform ist der Prozessor ausgebildet, innerhalb eines Lichtintensitätsbereichs, insbesondere Graustufenbereichs, liegende Pixel in der erfassten Bildaufnahme zu erfassen, um den umlaufenden Bereich zu erfassen.

Dadurch wird beispielsweise der Vorteil erreicht, dass die Analyse und/oder Verarbeitung der Bildaufnahme durch den Prozessor effizienter durchgeführt werden kann.

Gemäß einer Ausführungsform ist der Prozessor ausgebildet, vor der Erfassung des umlaufenden Bereichs in der erfassten Bildaufnahme bei Pixeln, deren Lichtintensität größer als ein erster Schwellenwert ist, die Lichtintensität durch einen erste, insbesondere maximale, Lichtintensität zu ersetzen, die größer als der erste Schwellenwert ist, und bei Pixeln, deren Lichtintensität kleiner als der erste Schwellenwert ist, die Lichtintensität durch eine zweite, insbesondere minimale, Lichtintensität zu ersetzen, die kleiner als der erste Schwellenwert ist.

Durch eine derartige Binarisierung der erfassten Bildaufnahme wird beispielsweise der Vorteil erreicht, dass der umlaufende Bereich effizienter erfasst werden kann. Gemäß einer Ausführungsform ist der Prozessor ausgebildet, vor der Erfassung des umlaufenden Bereichs in der erfassten Bildaufnahme bei Pixeln, deren Lichtintensität größer als der erste Schwellenwert ist und die einen zusammenhängenden Bereich ausbilden, dessen Fläche kleiner als ein zweiter Schwellenwert ist, die Lichtintensität durch die zweite, insbesondere minimale, Lichtintensität zu ersetzen.

Dadurch wird beispielsweise der Vorteil erreicht, dass Rauschartefakte in der erfassten Bildaufnahme entfernt werden können, was das Erfassen des umlaufenden Bereichs in der Bildaufnahme erleichtert.

Gemäß einer Ausführungsform ist der Prozessor ausgebildet, vor der Erfassung des umlaufenden Bereichs in der erfassten Bildaufnahme bei Pixeln, die in der erfassten Bildaufnahme innerhalb des Verlaufs der Kante liegen, die Lichtintensität durch eine minimale Lichtintensität zu ersetzen.

Dadurch wird beispielsweise der Vorteil erreicht, dass die durch die Kante begrenzte Aussparung in der erfassten Bildaufnahme ausgeblendet werden kann, was das Erfassen des umlaufenden Bereichs in der Bildaufnahme erleichtert.

Gemäß einer Ausführungsform ist der Prozessor ausgebildet, in der erfassten Bildaufnahme den Verlauf der Kante anhand eines Musterverlaufs auszurichten oder zu zentrieren.

Dabei kann der Prozessor ausgebildet sein, den Musterverlauf auf der Grundlage des Verlaufs der Kante eines bereits verifizierten Halbzeugs zu definieren. Dadurch wird beispielsweise der Vorteil erreicht, dass der umlaufende Bereich in der Bildaufnahme effizienter erfasst werden kann.

Gemäß einer Ausführungsform ist der Prozessor ausgebildet, in der erfassten Bildaufnahme auf der Grundlage des erfassten umlaufenden Bereichs einen Mittelpunkt des Verlaufs der Kante zu bestimmen.

Dadurch wird beispielsweise der Vorteil erreicht, dass die Analyse und/oder Verarbeitung der Bildaufnahme durch den Prozessor effizienter durchgeführt werden kann.

Gemäß einer Ausführungsform ist in der erfassten Bildaufnahme der erfasste umlaufende Bereich im Wesentlichen rechteckig und der Prozessor ist ausgebildet, in der erfassten Bildaufnahme Schnittpunkte von benachbarten Kanten des rechteckigen umlaufenden Bereichs zu bestimmen, um den Mittelpunkt des Verlaufs der Kante zu bestimmen.

Gemäß einer Ausführungsform ist der Prozessor ausgebildet, in der erfassten Bildaufnahme vom Mittelpunkt des Verlaufs der Kante solange pixelweise voranzuschreiten, bis, nachdem ein Pixel passiert worden ist, dessen Lichtintensität größer als ein dritter Schwellenwert ist, die Lichtintensität eines Pixels kleiner als ein vierter Schwellenwert ist. Dadurch wird beispielsweise der Vorteil erreicht, dass sich auf einfache Art und Weise die Größe, die Anordnung oder die Ausrichtung der durch die Kante begrenzten Aussparung bestimmen lässt, die zur Verifizierung des Halbzeugs herangezogen werden können.

Gemäß einer Ausführungsform ist der Prozessor ausgebildet, in der erfassten Bildaufnahme vom Mittelpunkt des Verlaufs der Kante horizontal und vertikal sowohl in positiver als auch in negativer Richtung solange pixelweise voranzuschreiten, bis, nachdem jeweils ein Pixel passiert worden ist, dessen Lichtintensität größer als ein dritter Schwellenwert ist, die Lichtintensität eines Pixels kleiner als ein vierter Schwellenwert ist. Dadurch wird beispielsweise der Vorteil erreicht, dass sich auf einfache Art und Weise die Größe, die Anordnung oder die Ausrichtung der durch die Kante begrenzten Aussparung bestimmen lässt, die zur Verifizierung des Halbzeugs herangezogen werden können.

Gemäß einem zweiten Aspekt betrifft die Erfindung ein Verfahren zum Verifizieren eines Halbzeugs mit einer durch eine Kante begrenzten Aussparung zur Aufnahme eines elektronischen Schaltkreises gemäß dem Anspruch 12.

Die Inspektionsvorrichtung gemäß dem ersten Aspekt der Erfindung ist dazu ausgebildet, das Verfahren gemäß dem zweiten Aspekt der Erfindung auszuführen. Weitere Ausführungsformen des Verfahrens gemäß dem zweiten Aspekt der Erfindung ergeben sich aus den vorstehend beschriebenen Ausführungsformen der Inspektionsvorrichtung gemäß dem ersten Aspekt der Erfindung.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm einer Inspektionsvorrichtung zum Verifizieren eines Chipkartenhalbzeugs mit einer Aussparung zur Aufnahme eines elektronischen Schaltkreises gemäß einer Ausführungsform; und
- Fig. 2: ein Diagramm mit den Schritten eines Verfahrens zum Verifizieren eines Kartenkörpers mit einer Aussparung zur Aufnahme eines elektronischen Schaltkreises gemäß einer Ausführungsform.

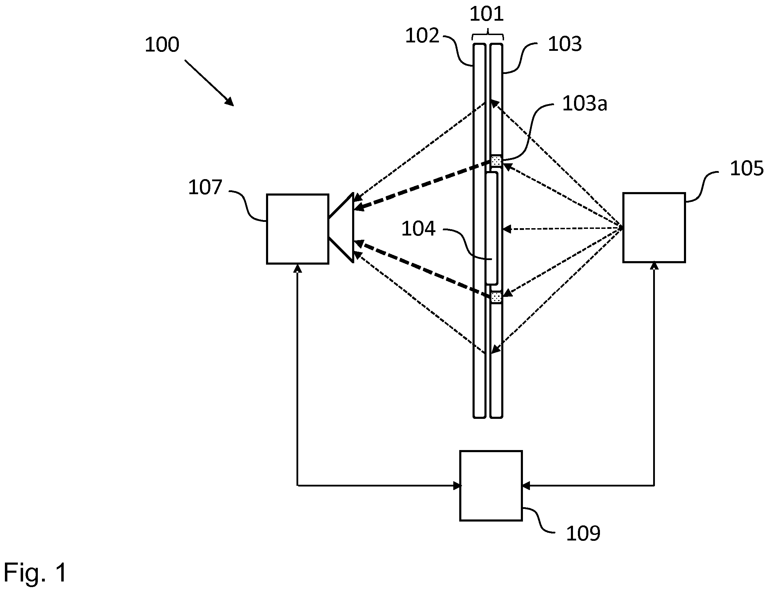

Figur 1 zeigt ein Diagramm in Form einer schematischen Seitenansicht (teilweise im Querschnitt) einer Inspektionsvorrichtung 100 zum Verifizieren eines Halbzeugs 101 mit einer durch eine Kante 103a begrenzten Aussparung. Die Aussparung ist dazu ausgebildet, beispielsweise im Rahmen der Chipkartenherstellung einen elektronischen Schaltkreis 104 in Form eines Chips oder Chipmoduls aufzunehmen.

Bei der in Figur 1 gezeigten Ausführungsform umfasst das Halbzeug 101, das auch als Inlay bezeichnet wird, eine Trägerfolie 102 und eine Ausgleichsfolie 103. Der elektronische Schaltkreis 104 ist beispielsweise mittels eines Klebstoffs auf der Trägerfolie 102 befestigt. Die durch die Kante 103a begrenzte Aussparung befindet sich in der Ausgleichsfolie 103, um den elektronischen Schaltkreis 104 aufzunehmen. Die Trägerfolie 102 und/oder die Ausgleichsfolie 103 können aus einem Kunststoffmaterial, insbesondere aus PC, PVC, ABS oder PET, bestehen.

Die in Figur 1 dargestellte Inspektionsvorrichtung 100 umfasst eine Beleuchtungsquelle 105, welche ausgebildet ist, das Halbzeug 101 und die darin ausgebildete Kante 103a mit Licht einer vorbestimmten Wellenlänge zu beleuchten, wie dies in Figur 1 schematisch dargestellt ist. Gemäß einer Ausführungsform ist die Beleuchtungsquelle 105 ausgebildet, das Halbzeug 101 sowie die darin ausgebildete Kante 103a mit UV-Licht zu beleuchten.

Die Inspektionsvorrichtung 100 umfasst ferner eine Bildkamera 107, welche ausgebildet ist, eine Bildaufnahme des beleuchteten Halbzeugs 101 mit der durch die Kante 103a begrenzten Aussparung zu erfassen. Hierzu ist das Halbzeug 101 zwischen der Beleuchtungsquelle 105 und der Bildkamera 107 angeordnet.

Bei der Bildkamera 107 kann es sich insbesondere um eine Digitalbildkamera handeln. Gemäß einer Ausführungsform ist die Bildkamera 107 ausgebildet, die Bildaufnahme des beleuchteten Halbzeugs 101 mit der durch die Kante 103a begrenzten Aussparung im UV-Licht zu erfassen.

Die Inspektionsvorrichtung 100 umfasst ferner einen Prozessor 109, welcher ausgebildet ist, in der Bildaufnahme mittels eines Laplace-Bildverarbeitungsfilters einen Verlauf der Kante 103a als einen umlaufenden Bereich zu erfassen und das Halbzeug 101 auf der Grundlage des erfassten Verlaufs der Kante 103a zu verifizieren. Ein Laplace-Bildverarbeitungsfilter ist eine diskrete Approximation des Laplace-Operators.

Der Prozessor 109 kann Teil eines Computers (nicht dargestellt) sein, der ein Display zur Anzeige der von der Bildkamera 107 erfassten und vom Prozessor 109 gegebenenfalls weiter verarbeiteten Bildaufnahme umfassen kann.

Es handelt sich bei der Kante 103a um eine Laserschneidkante. Im Fall einer Laserschneidkante 103a hat es sich gezeigt, dass bei der Bestrahlung des Halbzeugs 101 mittels der Beleuchtungsquelle 105 mit UV-Licht und der entsprechenden Erfassung der Bildaufnahme des Halbzeugs mittels der Bildkamera 107 im UV-Licht, die Kante 103a als umlaufender Bereich erhöhter Lichtintensität deutlich hervortritt. Dementsprechend ist der Prozessor 109 ausgebildet, in der Bildaufnahme mittels des Laplace-Filters den Verlauf der Kante 103a als einen umlaufenden Bereich mit einer Lichtintensität zu erfassen, welche größer als eine Lichtintensität eines in der erfassten Bildaufnahme außerhalb des umlaufenden Bereichs liegenden Bereichs ist.

Gemäß einer Ausführungsform ist der Prozessor 109 der Inspektionsvorrichtung 100 ausgebildet, innerhalb eines Lichtintensitätsbereichs, insbesondere Graustufenbereichs, liegende Pixel in der erfassten Bildaufnahme zu erfassen, um den umlaufenden Bereich zu erfassen.

Gemäß einer Ausführungsform ist der Prozessor 109 ausgebildet, vor der Erfassung des umlaufenden Bereichs in der erfassten Bildaufnahme bei Pixeln, deren Lichtintensität größer als ein erster Schwellenwert ist, die Lichtintensität vorzugsweise durch die maximale Lichtintensität zu ersetzen (z.B. auf die normierte maximale Lichtintensität 1), und bei Pixeln, deren Lichtintensität kleiner als der erste Schwellenwert ist, die Lichtintensität vorzugsweise durch die minimale Lichtintensität (z.B. auf die normierte minimale Lichtintensität 0) zu ersetzen. Mittels einer derartigen "Binarisierung" der Bildaufnahme durch den Prozessor 109, kann der umlaufende Bereich in der binarisierten Bildaufnahme effizienter erfasst werden.

Zur Verminderung von Rauschartefakten in der Bildaufnahme außerhalb der durch die Kante 103 begrenzten Aussparung ist gemäß einer Ausführungsform der Prozessor 109 ausgebildet, vor der Erfassung des umlaufenden Bereichs in der erfassten Bildaufnahme bei Pixeln, deren Lichtintensität größer als der erste Schwellenwert ist und die einen zusammenhängenden Bereich ausbilden, dessen Fläche kleiner als ein zweiter Schwellenwert ist, die Lichtintensität vorzugsweise durch die minimale Lichtintensität (z.B. durch die normierte minimale Lichtintensität 0) zu ersetzen.

Zur Ausblendung der durch die Kante 103a begrenzten Aussparung in der erfassten Bildaufnahme ist gemäß einer Ausführungsform der Prozessor 109 ausgebildet, vor der Erfassung des umlaufenden Bereichs in der erfassten Bildaufnahme bei Pixeln, die in der erfassten Bildaufnahme innerhalb des erfassten umlaufenden Bereichs liegen, d.h. innerhalb des Verlaufs der Kante 103a liegen, die Lichtintensität durch die minimale Lichtintensität (z.B. durch die normierte minimale Lichtintensität 0) zu ersetzen. Durch die Ausblendung der durch die Kante 103a begrenzten Aussparung in der erfassten Bildaufnahme kann das Erfassen des umlaufenden Bereichs in der Bildaufnahme erleichtert werden.

Ferner kann gemäß einer Ausführungsform der Prozessor 109 ausgebildet sein, in der erfassten Bildaufnahme eine Kontrastverstärkung durchzuführen. Hierzu kann der Prozessor 109 ausgebildet sein, vor der Erfassung des umlaufenden Bereichs in der erfassten Bildaufnahme bei benachbarten Pixeln, deren Lichtintensitäten sich um mehr als einen vordefinierten Schwellenwert unterscheiden, die Lichtintensitäten vorzugsweise durch maximale Lichtintensitäten zu ersetzen.

Gemäß einer Ausführungsform ist der Prozessor 109 ausgebildet, in der erfassten Bildaufnahme den umlaufenden Bereich bzw. den Verlauf der Laserschneidkante 103 anhand eines Musterverlaufs auszurichten oder zu zentrieren. Dabei kann der Prozessor 109 ausgebildet sein, den Musterverlauf auf der Grundlage des Verlaufs der Laserschneidkante eines bereits durch die Inspektionsvorrichtung 100 verifizierten Kartenkörpers zu definieren.

Zur genauen Bestimmung der Größe, Anordnung und/oder Ausrichtung des umlaufenden Bereichs bzw. der durch die Kante 103a begrenzten Aussparung in der erfassten Bildaufnahme, die ebenfalls zur Verifizierung des Halbzeugs 101 herangezogen werden kann, ist gemäß einer Ausführungsform der Prozessor 109 ausgebildet, in der erfassten Bildaufnahme auf der Grundlage des erfassten umlaufenden Bereichs einen Mittelpunkt des erfassten umlaufenden Bereichs bzw. des Verlaufs der Kante 103a zu bestimmen. Gemäß einer Ausführungsform ist der erfasste umlaufende Bereich in der erfassten Bildaufnahme im Wesentlichen rechteckig, wobei der Prozessor 109 ferner ausgebildet ist, in der erfassten Bildaufnahme Kantenschnittpunkte von benachbarten Kanten des rechteckigen umlaufenden Bereichs zu bestimmen, um den Mittelpunkt des rechteckigen umlaufenden Bereichs bzw. des Verlaufs der Kante 103a zu bestimmen. Der Mittelpunkt des rechteckigen umlaufenden Bereichs bzw. des Verlaufs der Kante 103a lässt sich beispielsweise bestimmen, indem der Schnittpunkt der Diagonalen bestimmt wird, welche die Kantenschnittpunkte miteinander verbinden.

Ferner kann der Prozessor 109 ausgebildet sein, in der erfassten Bildaufnahme vom Mittelpunkt des Verlaufs der Kante 103a solange vorzugsweise pixelweise, d.h. Pixel für Pixel, voranzuschreiten, und zwar vorzugsweise horizontal und vertikal sowohl in positiver als auch in negativer Richtung, bis, nachdem auf diese Weise ein Pixel passiert worden ist, dessen Lichtintensität größer als ein vordefinierter dritter Schwellenwert ist, die Lichtintensität des entsprechenden Pixels der erfassten Bildaufnahme kleiner als ein vordefinierter vierter Schwellenwert ist, wobei der dritte Schwellenwert größer als der vierte Schwellenwert ist. Hierdruck kann sehr genau der äußere Rand des umlaufenden Bereichs höherer Lichtintensität in der erfassten Bildaufnahme bestimmt werden. Für den Fall, dass der äußere Rand des umlaufenden Bereichs höherer Lichtintensität in der erfassten Bildaufnahme nicht gut zu erkennen ist, endet dieser Algorithmus in der erfassten Bildaufnahme spätestens bei dem "verrauschten" Ausgleichsfolie 103, welche die Kante 103 umgibt, wodurch der entstehende Messfehler auf ein Mindestmaß beschränkt werden kann.

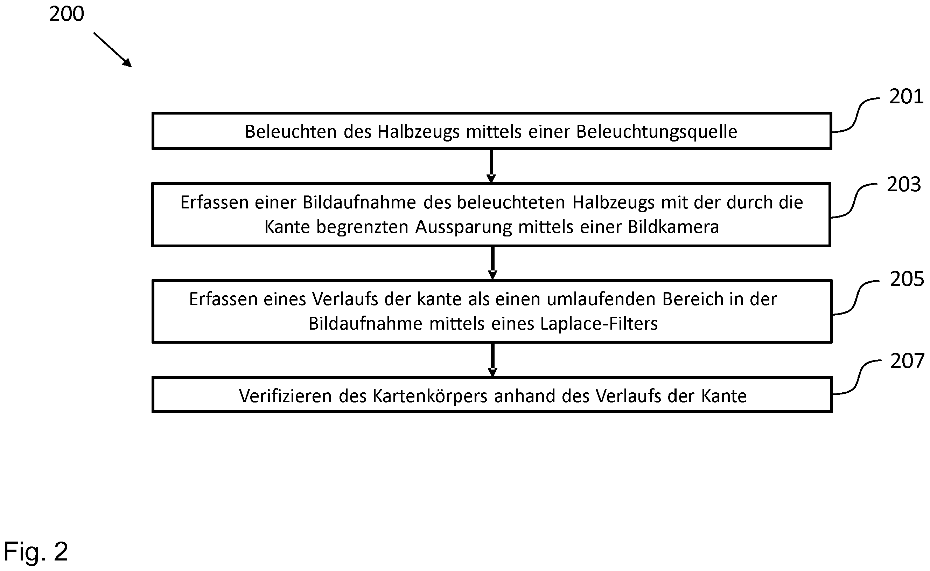

Figur 2 zeigt ein schematisches Diagramm eines Verfahrens 200 zum Verifizieren eines Kartenkörpers 101 mit einer durch eine Laserschneidkante 103 begrenzten Aussparung zur Aufnahme eines elektronischen Schaltkreises. Dabei umfasst das Verfahren 200 das Beleuchten 201 des Kartenkörpers 101 mit Licht einer vorbestimmten Wellenlänge mittels einer Beleuchtungsquelle 105; das Erfassen 203 einer Bildaufnahme des beleuchteten Kartenkörpers 101 mit der durch die Kante 103 begrenzten Aussparung mittels einer Bildkamera 107; das Erfassen 205 eines umlaufenden Bereichs mit einer Lichtintensität in der erfassten Bildaufnahme, welche größer als eine Lichtintensität eines in der erfassten Bildaufnahme außerhalb des umlaufenden Bereichs liegenden Bereichs ist, um den Verlauf der Kante 103 in der erfassten Bildaufnahme zu bestimmen; und das Verifizieren 207 des Kartenkörpers 101 auf der Grundlage des Verlaufs der Kante 103.

### BEZUGSZEICHENLISTE

- 100: Inspektionsvorrichtung
- 101: Halbzeug
- 102: Trägerfolie
- 103: Ausgleichsfolie
- 103a: Aussparungskante
- 104: elektronischer Schaltkreis
- 105: Beleuchtungsquelle
- 107: Bildkamera
- 109: Prozessor

- 200: Verfahren zum Verifizieren eines Halbzeugs
- 201: Beleuchten des Halbzeugs
- 203: Erfassen einer Bildaufnahme des Halbzeugs
- 205: Erfassen eines Verlaufs einer Aussparungskante
- 207: Verifizieren des Halbzeugs

## Patentansprüche

1. Inspektionsvorrichtung (100) zum Verifizieren eines Halbzeugs (101) zum Herstellen einer Chipkarte mit einer durch eine Kante (103a) begrenzten Aussparung zur Aufnahme eines elektronischen Schaltkreises (104) mit:
einer Beleuchtungsquelle (105), welche ausgebildet ist, das Halbzeug (101) mit Licht einer vorbestimmten Wellenlänge zu beleuchten;
einer Bildkamera (107), welche ausgebildet ist, eine Bildaufnahme des beleuchteten Halbzeugs (101) mit der durch die Kante (103a) begrenzten Aussparung zu erfassen; und
einem Prozessor (109), welcher ausgebildet ist, mittels eines Laplace-Filters einen Verlauf der Kante (103a) in der Bildaufnahme als einen umlaufenden Bereich zu erfassen und das Halbzeug (101) auf der Grundlage des erfassten Verlaufs der Kante (103a) zu verifizieren,
wobei die Kante (103a) eine Laserschneidkante ist,
wobei der Prozessor (109) ausgebildet ist, in der Bildaufnahme mittels des Laplace-Filters den Verlauf der Kante (103a) als einen umlaufenden Bereich mit einer Lichtintensität zu erfassen, welche größer als eine Lichtintensität eines in der erfassten Bildaufnahme außerhalb des umlaufenden Bereichs liegenden Bereichs ist,
wobei die Inspektionsvorrichtung (100) so ausgebildet ist, dass das Halbzeug (101) zwischen der Beleuchtungsquelle (105) und der Bildkamera (107) anordnenbar ist.

2. Inspektionsvorrichtung (100) nach Anspruch 1, wobei die Beleuchtungsquelle (105) ausgebildet ist, das Halbzeug (101) mit UV-Licht zu beleuchten, oder die Bildkamera (107) ausgebildet ist, die Bildaufnahme im UV-Licht zu erfassen.

3. Inspektionsvorrichtung (100) nach einem der vorstehenden Ansprüche, wobei der Prozessor (109) ausgebildet ist, innerhalb eines Lichtintensitätsbereichs, insbesondere Graustufenbereichs, liegende Pixel in der erfassten Bildaufnahme zu erfassen, um den umlaufenden Bereich zu erfassen.

4. Inspektionsvorrichtung (100) nach einem der vorstehenden Ansprüche, wobei der Prozessor (109) ausgebildet ist, vor der Erfassung des umlaufenden Bereichs in der erfassten Bildaufnahme bei Pixeln, deren Lichtintensität größer als ein erster Schwellenwert ist, die Lichtintensität durch einen erste, insbesondere maximale, Lichtintensität zu ersetzen, die größer als der erste Schwellenwert ist, und bei Pixeln, deren Lichtintensität kleiner als der erste Schwellenwert ist, die Lichtintensität durch eine zweite, insbesondere minimale, Lichtintensität zu ersetzen, die kleiner als der erste Schwellenwert ist.

5. Inspektionsvorrichtung (100) nach Anspruch 4, wobei der Prozessor (109) ausgebildet ist, vor der Erfassung des umlaufenden Bereichs in der erfassten Bildaufnahme bei Pixeln, deren Lichtintensität größer als der erste Schwellenwert ist und die einen zusammenhängenden Bereich ausbilden, dessen Fläche kleiner als ein zweiter Schwellenwert ist, die Lichtintensität durch die zweite, insbesondere minimale, Lichtintensität zu ersetzen.

6. Inspektionsvorrichtung (100) nach einem der vorstehenden Ansprüche, wobei der Prozessor (109) ausgebildet ist, vor der Erfassung des umlaufenden Bereichs in der erfassten Bildaufnahme bei Pixeln, die in der erfassten Bildaufnahme innerhalb des Verlaufs der Kante (103a) liegen, die Lichtintensität durch eine minimale Lichtintensität zu ersetzen.

7. Inspektionsvorrichtung (100) nach einem der vorstehenden Ansprüche, wobei der Prozessor (109) ausgebildet ist, in der erfassten Bildaufnahme den Verlauf der Kante (103a) anhand eines Musterverlaufs auszurichten oder zu zentrieren.

8. Inspektionsvorrichtung (100) nach einem der vorstehenden Ansprüche, wobei der Prozessor (109) ausgebildet ist, in der erfassten Bildaufnahme auf der Grundlage des erfassten umlaufenden Bereichs einen Mittelpunkt des Verlaufs der Kante (103a) zu bestimmen.

9. Inspektionsvorrichtung (100) nach Anspruch 8, wobei in der erfassten Bildaufnahme der erfasste umlaufende Bereich im Wesentlichen rechteckig ist und wobei der Prozessor (109) ausgebildet ist, in der erfassten Bildaufnahme Schnittpunkte von benachbarten Kanten des rechteckigen umlaufenden Bereichs zu bestimmen, um den Mittelpunkt des Verlaufs der Kante (103a) zu bestimmen.

10. Inspektionsvorrichtung (100) nach Anspruch 8 oder 9, wobei der Prozessor (109) ausgebildet ist, in der erfassten Bildaufnahme vom Mittelpunkt des Verlaufs der Kante (103a) solange pixelweise voranzuschreiten, bis, nachdem ein Pixel passiert worden ist, dessen Lichtintensität größer als ein dritter Schwellenwert ist, die Lichtintensität eines Pixels kleiner als ein vierter Schwellenwert ist.

11. Inspektionsvorrichtung (100) nach Anspruch 10, wobei der Prozessor (109) ausgebildet ist, in der erfassten Bildaufnahme vom Mittelpunkt des Verlaufs der Kante horizontal und vertikal in positiver und negativer Richtung solange pixelweise voranzuschreiten, bis, nachdem jeweils ein Pixel passiert worden ist, dessen Lichtintensität größer als ein dritter Schwellenwert ist, die Lichtintensität eines Pixels kleiner als ein vierter Schwellenwert ist.

12. Verfahren (200) zum Verifizieren eines Halbzeugs (101) mit einer durch eine Kante (103a) begrenzten Aussparung zur Aufnahme eines elektronischen Schaltkreises (104) mit:
Beleuchten (201) des Halbzeugs (101) mit Licht einer vorbestimmten Wellenlänge mittels einer Beleuchtungsquelle (105);
Erfassen (203) einer Bildaufnahme des beleuchteten Halbzeugs (101) mit der durch die Kante (103a) begrenzten Aussparung mittels einer Bildkamera (107);
Erfassen (205) eines Verlaufs der Kante (103a) mittels eines Laplace-Filters als einen umlaufenden Bereich in der Bildaufnahme; und
Verifizieren (207) des Halbzeugs (101) auf der Grundlage des erfassten Verlaufs der Kante (103a),
wobei die Kante (103a) eine Laserschneidkante ist,
wobei in der Bildaufnahme mittels des Laplace-Filters der Verlauf der Kante als ein umlaufender Bereich mit einer Lichtintensität erfasst wird, welche größer als eine Lichtintensität eines in der erfassten Bildaufnahme außerhalb des umlaufenden Bereichs liegenden Bereichs ist,
wobei das Halbzeug (101) zwischen der Beleuchtungsquelle (105) und der Bildkamera (107) angeordnet ist.

## Claims

1. An inspection device (100) for verifying a semi-finished product (101) for producing a chip card with a recess delimited by an edge (103a) for receiving an electronic circuit (104), the inspection device comprising:
an illumination source (105) configured to illuminate the semi-finished product (101) with light of a predetermined wavelength;
an image camera (107) configured to capture an image acquisition of the illuminated semi-finished product (101) with the recess delimited by the edge (103a); and
a processor (109) configured to detect a course of the edge (103a) in the image acquisition as a circumferential region using a Laplace filter and verify the semi-finished product (101) on the basis of the detected course of the edge (103a),
wherein the edge (103a) is a laser cutting edge,
wherein the processor (109) is configured to detect the course of the edge (103a) in the image acquisition by means of the Laplace filter as a circumferential region with a light intensity which is greater than a light intensity of a region situated outside the circumferential region in the captured image acquisition,
wherein the inspection device (100) is configured such that the semi-finished product (101) is arrangeable between the illumination source (105) and the image camera (107).

2. The inspection device (100) according to claim 1, wherein the illumination source (105) is configured to illuminate the semi-finished product (101) with UV light, or the image camera (107) is configured to capture the image acquisition in UV light.

3. The inspection device (100) according to one of the preceding claims, wherein the processor (109) is configured to detect pixels situated within a light intensity range, in particular a grayscale range, in the captured image acquisition in order to detect the circumferential region.

4. The inspection device (100) according to one of the preceding claims, wherein the processor (109) is configured to replace, prior to the detection of the circumferential region in the captured image acquisition, the light intensity for pixels whose light intensity is greater than a first threshold value with a first, in particular maximum, light intensity that is greater than the first threshold value and for pixels whose light intensity is less than the first threshold value with a second, in particular minimum, light intensity that is smaller than the first threshold value.

5. The inspection device (100) according to claim 4, wherein the processor (109) is configured to replace, prior to the detection of the circumferential region in the captured image acquisition, the light intensity for pixels whose light intensity is greater than the first threshold value and which form a contiguous region whose area is smaller than a second threshold value with the second, in particular minimum, light intensity.

6. The inspection device (100) according to one of the preceding claims, wherein the processor (109) is configured to replace, prior to the detection of the circumferential region in the captured image acquisition, the light intensity for pixels that are situated in the captured image acquisition within the course of the edge (103a) with a minimum light intensity.

7. The inspection device (100) according to one of the preceding claims, wherein the processor (109) is configured to align or center the course of the edge (103a) in the captured image acquisition using a pattern course.

8. The inspection device (100) according to one of the preceding claims, wherein the processor (109) is configured to determine a center point of the course of the edge (103a) in the captured image acquisition on the basis of the detected circumferential region.

9. The inspection device (100) according to claim 8, wherein in the captured image acquisition the detected circumferential region is essentially rectangular and wherein the processor (109) is configured to determine intersection points of adjacent edges of the rectangular circumferential region in the captured image acquisition to determine the center point of the course of the edge (103a).

10. The inspection device (100) according to claim 8 or 9, wherein the processor (109) is configured to progress pixel by pixel in the captured image acquisition from the center point of the course of the edge (103a) until, after a pixel whose light intensity is greater than a third threshold has been passed, the light intensity of a pixel is smaller than a fourth threshold.

11. The inspection device (100) according to claim 10, wherein the processor (109) is configured to progress pixel by pixel in the captured image acquisition from the center point of the course of the edge horizontally and vertically in positive and negative directions until, after a respective pixel has been passed whose light intensity is greater than a third threshold value, the light intensity of a pixel is less than a fourth threshold value.

12. A method (200) for verifying a semi-finished product (101) with a recess delimited by an edge (103a) for receiving an electronic circuit (104), the method comprising:
Illuminating (201) the semi-finished product (101) with light of a predetermined wavelength by means of an illumination source (105);
Capturing (203) an image acquisition of the illuminated semi-finished product (101) with the recess delimited by the edge (103a) by means of an image camera (107);
Detecting (205) a course of the edge (103a) by means of a Laplace filter as a circumferential region in the image acquisition; and
Verifying (207) the semi-finished product (101) on the basis of the detected course of the edge (103a),
wherein the edge (103a) is a laser cutting edge,
wherein in the image acquisition the course of the edge is detected by means of the Laplace filter as a circumferential region with a light intensity which is greater than a light intensity of a region situated outside the circumferential region in the captured image acquisition,
wherein the semi-finished product (101) is arranged between the illumination source (105) and the image camera (107).

## Revendications

1. Dispositif d'inspection (100) servant à vérifier un demi-produit (101) afin de fabriquer une carte à puce comportant un évidement délimité par un bord (103a) et servant à recevoir un circuit électronique (104), comportant :
une source d'éclairage (105) qui est conçue pour éclairer le demi-produit (101) avec une lumière d'une longueur d'onde prédéterminée ;
une caméra d'image (107) qui est conçue pour capturer une prise d'image du demi-produit éclairé (101) comportant l'évidement délimité par le bord (103a) ; et
un processeur (109) qui est conçu pour capturer un tracé du bord (103a) dans la prise d'image en tant que zone périphérique au moyen d'un filtre laplacien et pour vérifier le demi-produit (101) sur la base du tracé capturé du bord (103a),
le bord (103a) étant un bord de coupe laser,
le processeur (109) étant conçu pour capturer le tracé du bord (103a) dans la prise d'image en tant que zone périphérique au moyen du filtre laplacien, avec une intensité lumineuse supérieure à une intensité lumineuse d'une zone située à l'extérieur de la zone périphérique dans la prise d'image capturée,
le dispositif d'inspection (100) étant conçu de telle sorte que le demi-produit (101) peut être disposé entre la source d'éclairage (105) et la caméra d'image (107).

2. Dispositif d'inspection (100) selon la revendication 1, dans lequel la source d'éclairage (105) est conçue pour éclairer le demi-produit (101) avec une lumière UV ou la caméra d'image (107) est conçue pour capturer la prise d'image dans la lumière UV.

3. Dispositif d'inspection (100) selon l'une des revendications précédentes, dans lequel le processeur (109) est conçu pour capturer des pixels situés à l'intérieur d'une zone d'intensité lumineuse, en particulier une zone de nuances de gris, dans la prise d'image capturée, afin de capturer la zone périphérique.

4. Dispositif d'inspection (100) selon l'une des revendications précédentes, dans lequel, avant la capture de la zone périphérique dans la prise d'image capturée, pour des pixels dont l'intensité lumineuse est supérieure à une première valeur seuil, le processeur (109) est conçu pour remplacer l'intensité lumineuse par une première intensité lumineuse, en particulier maximale, qui est supérieure à la première valeur seuil et, pour des pixels dont l'intensité lumineuse est inférieure à la première valeur seuil, pour remplacer l'intensité lumineuse par une seconde intensité lumineuse, en particulier minimale, qui est inférieure à la première valeur seuil.

5. Dispositif d'inspection (100) selon la revendication 4, dans lequel, avant la capture de la zone périphérique dans la prise d'image capturée, pour des pixels dont l'intensité lumineuse est supérieure à la première valeur seuil et qui forment une zone contiguë dont la surface est inférieure à une deuxième valeur seuil, le processeur (109) est conçu pour remplacer l'intensité lumineuse par la seconde intensité lumineuse, en particulier minimale.

6. Dispositif d'inspection (100) selon l'une des revendications précédentes, dans lequel, avant la capture de la zone périphérique dans la prise d'image capturée, pour des pixels situés à l'intérieur du tracé du bord (103a) dans la prise d'image capturée, le processeur (109) est conçu pour remplacer l'intensité lumineuse par une intensité lumineuse minimale.

7. Dispositif d'inspection (100) selon l'une des revendications précédentes, dans lequel le processeur (109) est conçu pour aligner ou centrer le tracé du bord (103a) dans la prise d'image capturée à l'aide d'un tracé de motif.

8. Dispositif d'inspection (100) selon l'une des revendications précédentes, dans lequel le processeur (109) est conçu pour déterminer un point central du tracé du bord (103a) dans la prise d'image capturée sur la base de la zone périphérique capturée.

9. Dispositif d'inspection (100) selon la revendication 8, dans lequel, dans la prise d'image capturée, la zone périphérique capturée est sensiblement rectangulaire, et dans lequel le processeur (109) est conçu pour déterminer, dans la prise d'image capturée, des points d'intersection de bords adjacents de la zone périphérique rectangulaire, afin de déterminer le point central du tracé du bord (103a).

10. Dispositif d'inspection (100) selon la revendication 8 ou 9, dans lequel le processeur (109) est conçu pour progresser pixel par pixel dans la prise d'image capturée depuis le point central du tracé du bord (103a), jusqu'à ce que, après le passage d'un pixel dont l'intensité lumineuse est supérieure à une troisième valeur seuil, l'intensité lumineuse d'un pixel soit inférieure à une quatrième valeur seuil.

11. Dispositif d'inspection (100) selon la revendication 10, dans lequel le processeur (109) est conçu pour progresser pixel par pixel dans la prise d'image capturée depuis le point central du tracé du bord, horizontalement et verticalement dans des directions positive et négative, jusqu'à ce que, après le passage d'un pixel respectif dont l'intensité lumineuse est supérieure à une troisième valeur seuil, l'intensité lumineuse d'un pixel soit inférieure à une quatrième valeur seuil.

12. Procédé (200) permettant la vérification d'un demi-produit (101) comportant un évidement délimité par un bord (103a) et servant à recevoir un circuit électronique (104), comportant :
l'éclairage (201) du demi-produit (101) avec une lumière d'une longueur d'onde prédéterminée au moyen d'une source d'éclairage (105) ;
la capture (203) d'une prise d'image du demi-produit éclairé (101) comportant l'évidement délimité par le bord (103a) au moyen d'une caméra d'image (107) ;
la capture (205) d'un tracé du bord (103a) au moyen d'un filtre laplacien en tant que zone périphérique dans la prise d'image ; et
la vérification (207) du demi-produit (101) sur la base du tracé capturé du bord (103a),
le bord (103a) étant un bord de coupe laser,
le tracé du bord dans la prise d'image étant capturé au moyen du filtre laplacien en tant que zone périphérique avec une intensité lumineuse qui est supérieure à une intensité lumineuse d'une zone située à l'extérieur de la zone périphérique dans la prise d'image capturée,
le demi-produit (101) étant disposé entre la source d'éclairage (105) et la caméra d'image (107).
